# EUROPEAN PATENT APPLICATION

(11) **EP 2 410 779 A1**
(43) Date of publication of application: **25.01.2012**
(21) Application number: 09841859.3
(22) Date of filing: 18.03.2009
(51) Int. Cl.: H04W 16/10, H04W 16/26, H04W 24/10, H04W 72/04

(54) **RELAY STATION, RELAY METHOD, BASE STATION, COMMUNICATION METHOD, AND COMMUNICATION SYSTEM**

(71) Applicant: Fujitsu Limited, Kawasaki-shi, Kanagawa 211-8588 (JP)
(72) Inventor: SEKI, Hiroyuki, Kawasaki-shi Kanagawa 211-8588 (JP)
(74) Representative: Wilding, Frances Ward
(86) International application number: PCT/JP2009/055316
(87) International publication number: WO 2010/106654

(57) **Abstract**

Relay nodes (121, 122) relay wireless communication between a base station (110) and mobile stations (131-134). The relay node (121) acquires communication qualities for the communication with the mobile stations (131, 132). The relay node (121) calculates representative values of the acquired communication qualities and transmits the calculated representative values to the base station (110). The base station (110), based on the representative values transmitted by the relay node (121), allocates wireless resources for wireless paths between the relay node (121) and the mobile stations (131, 132). The relay node (121) allocates to a wireless path between the relay node (121) and the mobile station (131) and a wireless path between the relay node (121) and the mobile station (132), the wireless nodes allocated by the base station (110).

## Description

### TECHNICAL FIELD

The embodiments discussed herein are related to a relay node, a relay method, a base station, a communication method, and a communications system.

### BACKGROUND ART

The review of wireless relay (relay) as effective technology to realize high throughput over a wide area is being actively conducted. At IEEE in the 802.16j Relay Task Group, the review of multi-hop relay is advancing. In the 3GPP, investigation related to relaying functionality is advancing in the development of LTE-Advanced.

For example, one communications system uses wireless resources (frequency, etc.) that differ between a first wireless interval and a second wireless interval to eliminate interference in intervals between a base station and relay nodes, and between relay nodes and mobile stations, and to realize high throughput. Hereinafter, intervals between a base station and a relay node are regarded as a first wireless interval and intervals between a relay node and a mobile station are regarded as a second wireless interval.

In such a communications system, for example, multiple relay nodes are connected to 1 base station and multiple mobile stations are connected to each of the relay nodes. In the first wireless interval, the base station allocates wireless resources for communicating with the relay nodes. In the second wireless interval, the relay nodes each allocate wireless resources for communicating with the mobile stations.

To achieve high throughput, wireless resource allocation is performed such that the same wireless resources are not used within the first wireless interval or within the second wireless interval and further such that the same wireless resources are not used between the first wireless interval and the second wireless interval. To allocate wireless resources such that interference does not occur, for example, the frequencies to be used in the first wireless interval and the frequencies to be used in the second wireless interval are preliminarily separated.

The propagation states in the first wireless interval and in the second wireless interval respectively vary over time according to the surrounding propagation environment. Consequently, if bands are preliminarily allocated to the first wireless interval and the second wireless interval as needed, high utilization efficiency of frequency may not be achieved.

Further, for example, if WiMAX (802.16d) is used in the first wireless interval and wireless LAN (Wi-Fi) is used in the second wireless interval, architecture that uses differing wireless access schemes is conceivable in each of the wireless intervals. However, when the relay nodes independently allocate wireless resources, interference occurs between the wireless resources used by each of the relay nodes and throughput drops.

On the contrary, technology that performs wireless resource allocation (scheduling) to first wireless interval and second wireless interval concentrating at the base station has been disclosed (for example, see Patent Document 1). In this technology, the relay node has a scheduling controller that performs scheduling such that slot collisions do not occur when 1 relay node relays the signals of multiple base stations and based on quality indicative information transmitted from mobile base stations and relay nodes, slot allocation is intensively performed.

Patent Document 1: Japanese Laid-Open Patent Publication No. 2008-60868

### DISCLOSURE OF INVENTION

### PROBLEM TO BE SOLVED BY THE INVENTION

However, with the conventional technology above, a problem arises in that the volume of quality indicative information transmitted from the mobile stations and the relay nodes to the base station becomes great. In particular, if a large number of mobile stations are connected to 1 relay node, the volume of quality indicative information transmitted from the mobile stations to the base station becomes enormous. As a result, a problem arises in that throughput of the first wireless interval drops. If processing to allocate wireless resources to a large number of mobile stations is caused to concentrate at the base station, a further problem arises in that processing load for scheduling at the base station significantly increases.

An object of the disclosed relay node, relay method, base station, communication method, and communications system is to solve the problems above and reduce the volume of quality indicative information transmitted to the base station.

### MEANS FOR SOLVING PROBLEM

To solve the problems above and achieve an object, a relay node that relays wireless communication between a base station and mobile stations, includes an acquiring unit that acquires communication qualities between the relay node and the mobile stations; a calculating unit that calculates a representative value for each of the acquired communication qualities; a transmitting unit that transmits the calculated representative values to the base station; a receiving unit that receives from the base station, allocation information indicating wireless resources that have been allocated by the base station based on the representative values transmitted by the transmitting unit; and an allocation unit that allocates to the mobile stations, the wireless resources indicated by the received allocation information.

According to the configuration above, representative values concerning communication qualities between the relay node and the mobile stations may be sent to the base station and the wireless resources allocated by the base station may be allocated to the mobile stations by the relay node.

### EFFECT OF THE INVENTION

According to the disclosed relay node, relay method, base station, communication method, and communications system, the volume of quality indicative information transmitted to the base station may be reduced.

### BRIEF DESCRIPTION OF DRAWINGS

FIG. 1 is a block diagram of a communications system according to an embodiment;
FIG. 2 is a diagram of wireless resource allocation in the communications system depicted in FIG. 1;
FIG. 3 is a block diagram of a base station depicted in FIG. 1;
FIG. 4 is a block diagram of a relay node depicted in FIG. 1;
FIG. 5 is a block diagram of a mobile station depicted in FIG. 1;
FIG. 6 is a sequence diagram of an example of downlink operations of the communications system;
FIG. 7 is a sequence diagram of an example of uplink operations of the communications system;
FIG. 8 is a diagram of example of wireless resource allocation depicted in FIG. 2;
FIG. 9 is a diagram of an example CQIs received by a relay node (RN1);
FIG. 10 is a diagram of an example of representative values calculated by the relay node (RN1);
FIG. 11 is a diagram of an example of the CQIs received by a relay node (RN2);
FIG. 12 is a diagram of an example of the representative values calculated by the relay node (RN2);
FIG. 13 is a diagram of an example of the representative values and the CQIs received by the base station;
FIG. 14 is a diagram of an example of wireless resource allocation by the base station;
FIG. 15 is a diagram of wireless resource allocation by the relay node (RN1); and
FIG. 16 is a diagram of an example of wireless resource allocation by the relay node (RN2).

### EXPLANATIONS OF LETTERS OR NUMERALS

100 communications system
101 core network
102 first wireless interval
103 second wireless interval
110 base station
121, 122 relay node
131-134 mobile station
201-206, 210 wireless resource
301, 401, 407, 501 reception antenna
302, 402, 408, 502 receiver
303, 403, 409, 503 demultiplexer
304, 404, 416, 510 control CH decoder
305, 405 DL scheduler
306, 406, 412, 506 control CH generator
307 IP receiver
308, 512 DL buffer
309, 418, 426, 516 data CH generator
310, 419, 427, 514 pilot generator
311, 413, 420, 507 multiplexer
312, 414, 421, 508 transmitter
313, 415, 422, 509 transmission antenna
314, 410, 423, 504 SIR measurer
315, 424 UL scheduler
316, 417, 425, 511 data CH decoder
317, 515 UL buffer
318 IP transmitter
411, 505 CQI generator
513 data processor
910, 920, 1110, 1120, 1310, 1320 CQI
1010, 1210 representative values
1410, 1420, 1430, 1440, 1510, 1520, 1610, 1620 allocation information
#1-#10 wireless resources

### BEST MODE(S) FOR CARRYING OUT THE INVENTION

With reference to the accompanying drawings, preferred embodiments of a relay node, a relay method, a base station, a communication method, and a communications system will be described in detail. The relay node, the relay method, the base station, the communication method, and the communications system send to a base station, representative values concerning CQIs between relay nodes and mobile stations and perform at the relay nodes, the allocation of the wireless resources to the mobile stations, the wireless resources being those that have been allocated by the base station. Consequently, the volume of CQI information sent to the base station may be reduced.

### (Embodiment)

### (Configuration of communications system)

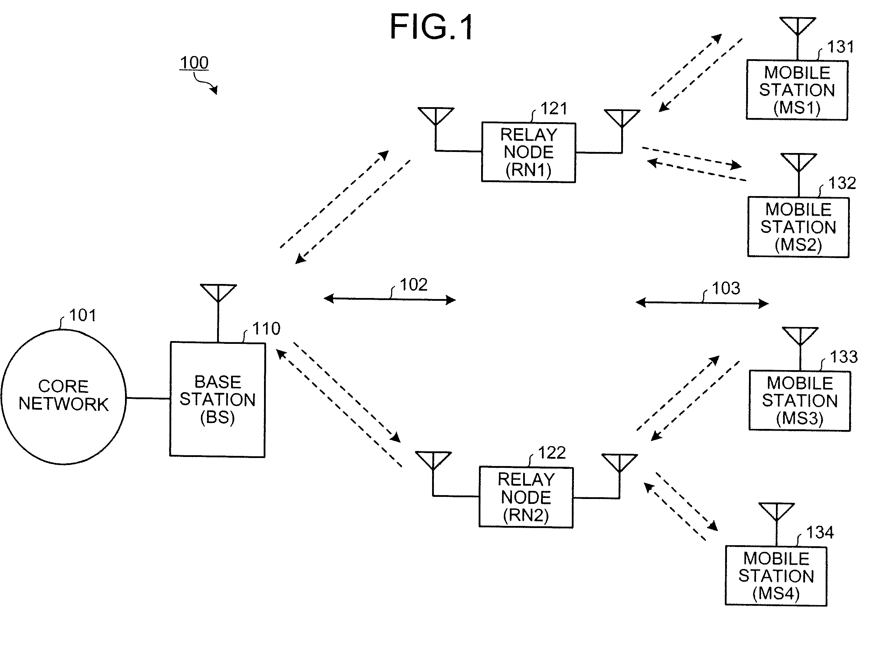

FIG. 1 is a block diagram of a communications system according to an embodiment. As depicted in FIG. 1, a communications system 100 according to the embodiment includes a base station 110 (BS), relay nodes 121, 122 (RN), and mobile stations 131-134 (MS). The base station 110 communicates wirelessly with the mobile stations 131, 132 by relay via the relay node 121.

The base station 110 wirelessly communicates with the mobile stations 133, 134 by relay via the relay node 122 and is connected to a core network 101. The relay nodes 121 and 122 are in a surrounding area of the base station 110. The base station 110 wirelessly communicates with the relay nodes 121 and 122, respectively. Wireless intervals between the base station 110 and the respective relay nodes (the relay node 121 and the relay node 122) are regarded as a first wireless interval 102.

The mobile stations 131 and 132 are in a surrounding area of the relay node 121. The relay node 121 wirelessly communicates with the mobile stations 131 and 132. The mobile stations 133 and 133 are in a surrounding are of the relay node 122. The relay node 122 wirelessly communicates with the mobile stations 133 and 133.

Wireless intervals between the relay node 121 and the mobile stations 131, 132 and those between the relay node 122 and the mobile stations 133, 134 are regarded as a second wireless interval 103. The base station 110 allocates the wireless resources that the relay nodes 121, 122 use in the first wireless intervals 102 and the second wireless intervals 103. However, the allocation of wireless resources for each mobile station, in the second wireless interval, is performed by the relay nodes 121 and 122.

### (Wireless resource allocation)

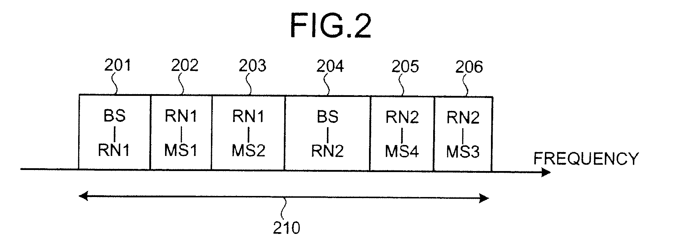

FIG. 2 is a diagram of wireless resource allocation in the communications system depicted in FIG. 1. The horizontal axis in FIG. 2 represents frequency. A wireless resource 210 represents a frequency band used in the communications system 100 (see FIG. 1). As depicted in FIG. 2, in the communications system 100, the wireless resource 210 used in the first wireless interval 102 and the second wireless interval 103 are mixed and allocated.

For example, a wireless resource 201 is allocated to a wireless path (first wireless interval 102) between the base station 110 (BS) and the relay node 121 (RN1). A wireless resource 202 is allocated to a wireless path (second wireless interval 103) between the relay node 121 (RN1) and the mobile station 131 (MS1). A wireless resource 203 is allocated to a wireless path (second wireless interval 103) between the relay node 121 (RN1) and the mobile station 132 (MS2).

A wireless resource 204 is allocated to a wireless path (first wireless interval 102) between the base station 110 (BS) and the relay node 122 (RN2). A wireless resource 205 is allocated to a wireless path (second wireless interval 103) between the relay node 122 (RN2) and the mobile station 134 (MS4). A wireless resource 206 is allocated to a wireless path (second wireless interval 103) between the relay node 122 (RN2) and the mobile station 133 (MS3).

In this manner, the wireless resources 201-206 included in the wireless resource 210 are allocated such that wireless paths in the first wireless interval 102 and the second wireless interval 103 do not interfere with one another. Consequently, in the first wireless interval 102 and the second wireless interval 103 the minimum wireless resources necessary, whereby, frequency may be used more efficiently. Further, since allocation may be performed such that interference between the relay node 121 and the relay node 122 does not occur, throughput may be improved.

### (Base station configuration)

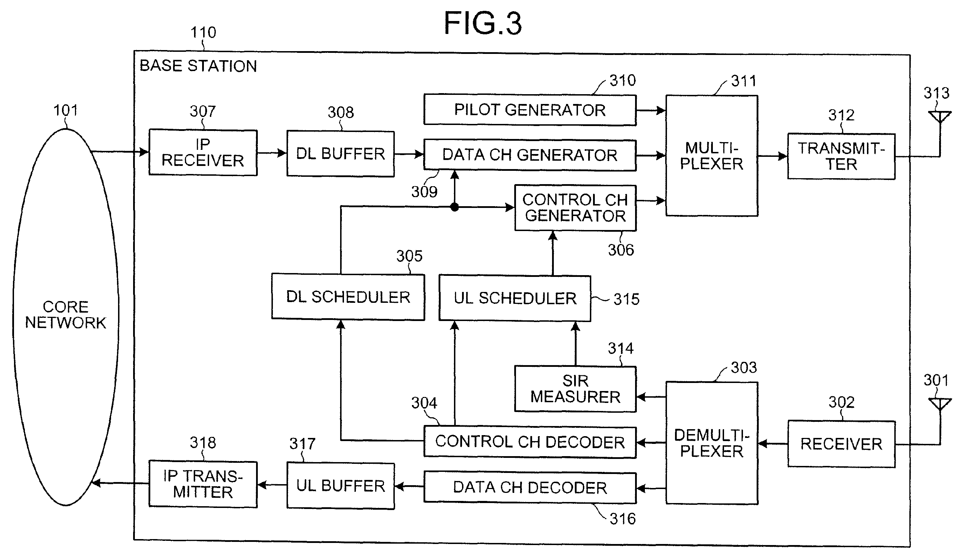

FIG. 3 is a block diagram of the base station depicted in FIG. 1. As depicted in FIG. 3, the base station 110 (see FIG. 1) includes a reception antenna 301, a receiver 302, a demultiplexer 303, a control CH decoder 304, a DL scheduler 305, a control CH generator 306, a IP receiver 307, a DL buffer 308, a data CH generator 309, a pilot generator 310, a multiplexer 311, a transmitter 312, and a transmission antenna 313.

The base station 110 further includes an SIR measurer 314, a UL scheduler 315, a data CH decoder 316, a UL buffer 317, and an IP transmitter 318. The reception antenna 301, the receiver 302, and the control CH decoder 304 form a receiving unit that receives from the relay nodes 121, 122, representative values of channel quality indicators (CQI, i.e., quality indicative information) between the relay nodes 121, 122 and the mobile stations.

The DL scheduler 305 and the UL scheduler 315 form an allocating unit that based on the representative values received by the receiving unit, allocates wireless resources for the wireless paths between relay nodes and mobile stations. The control CH generator 306, the transmitter 312, and the transmission antenna 313 form a transmitting unit that transmits to the relay nodes, allocation information indicative of the wireless resources allocated by the allocating unit.

### (Processing related to downlink of base station)

First, processing at the base station 110 and related to the downlink (DL) that transfers data from the core network 101 to each mobile station will be described. The receiver 302 receives via the reception antenna 301, signals transmitted from the relay node 121 and the relay node 122.

The signals received by the receiver 302 include the representative values (RN1-MS) of the CQIs between the relay node 121 and the mobile stations 131, 132 and the representative values (RN2-MS) of the CQIs between the relay node 122 and the mobile stations 133, 134. The signals received by the receiver 302 further include the CQI (BS-RN1) between the base station 110 and the relay node 121, and the CQI (BS-RN2) between the base station 110 and the relay node 122. The receiver 302 outputs the received representative values and CQIs to the demultiplexer 303.

The demultiplexer 303 outputs to the control CH decoder 304, the representative values (RN1-MS), the representative values (RN2-MS), the CQI (BS-RN1), and the CQI (BS-RN2) output from the receiver 302. The control CH decoder 304 decodes the representative values and the CQIs output from the demultiplexer 303 and outputs the decoded representative values and CQIs to the DL scheduler 305.

The DL scheduler 305 performs wireless resource allocation, based on the representative values (RN1-MS), the representative values (RN2-MS), the CQI (BS-RN1), and the CQI (BS-RN2) output from the control CH decoder 304.

For example, the DL scheduler 305 allocates wireless resources for 4 types of wireless paths including a wireless path between the base station 110 and the relay node 121, wireless paths between the relay node 121 and the mobile stations 131, 132, a wireless path between the base station 110 and the relay node 122, and wireless paths between the relay node 122 and the mobile stations 133, 134. Besides using the representative values of the CQIs and the CQIs, the DL scheduler 305 may allocate the wireless resources, based on ID information of the relay nodes 121, 122 and the mobile stations 131-134, traffic information and QoS information for the mobile stations 131-134, etc.

The DL scheduler 305 outputs to the control CH generator 306 and the data CH generator 309, allocation information indicating the wireless resources allocated to the wireless paths. The allocation information output by the DL scheduler 305 includes allocation information (BS-RN1), allocation information (RN1-MS), allocation information (BS-RN2), and allocation information (RN2-MS).

The allocation information (BS-RN1) indicates the wireless resources allocated to the wireless path between the base station 110 and the relay node 121. The allocation information (RN1-MS) indicates the wireless resources allocated for the wireless paths between the relay node 121 and the mobile stations 131, 132. The allocation information (BS-RN2) indicates the wireless resources allocated to the wireless path between the base station 110 and the relay node 122. The allocation information (RN2-MS) indicates the wireless resources allocated for the wireless paths between the relay node 122 and the mobile stations 133, 134.

The control CH generator 306 assigns to control channels (CH), the allocation information output from the DL scheduler 305 and then outputs the allocation information to the multiplexer 311. The allocation information (BS-RN1) and allocation information (RN1-MS) output from the control CH generator 306 are transmitted by the transmitter 312 to the relay node 121. The allocation information (BS-RN2) and allocation information (RN2-MS) output from the control CH generator 306 are transmitted by the transmitter 312 to the relay node 122.

The IP receiver 307 receives DL data that are delivered from the core network 101 and addressed to the mobile stations 131-134. The DL data received by the IP receiver 307 respectively include DL data (MS1), DL data (MS2), DL data (MS3), and DL data (MS4) addressed to the mobile stations 131-134. The IP receiver 307 outputs the received DL data to the DL buffer 308.

The DL buffer 308 stores the DL data output from the IP receiver 307. The data CH generator 309, based on the allocation information output from the DL scheduler 305, assigns the DL data stored in the DL buffer 308 to the wireless resources and outputs to the multiplexer 311, the DL data that has been assigned to the wireless resources.

For example, the data CH generator 309 assigns DL data (MS1) and DL data (MS2) to the wireless resources indicated by the allocation information (BS-RN1) output from the DL scheduler 305. In this case, the DL data (MS1) and the DL data (MS2) are transmitted using the wireless resources indicated by allocation information (BS-RN1).

Further, the data CH generator 309 assigns DL data (MS3) and DL data (MS4) to the wireless resources indicated by the allocation information (BS-RN2) output from the DL scheduler 305. In this case, the DL data (MS3) and the DL data (MS4) are transmitted using the wireless resources indicated by the allocation information (BS-RN2).

The pilot generator 310 generates a pilot signal (BS) and outputs the pilot signal (BS) to the multiplexer 311. The multiplexer 311 multiplexes the allocation information output from the control CH generator 306, the DL data output from the data CH generator 309 and the pilot signal (BS) output from the pilot signal generator, and outputs the multiplexed signal to the transmitter 312.

The transmitter 312 transmits, via the transmission antenna 313, the multiplexed signal output from the multiplexer 311. The pilot signal (BS) included in the multiplexed signal transmitted by the transmitter 312 is received by the relay nodes 121 and 122. The allocation information (BS-RN1) and the allocation information (RN1-MS) included in the multiplexed signal transmitted by the transmitter 312 are received by the relay node 121.

The allocation information (BS-RN2) and the allocation information (RN2-MS) included in the multiplexed signal transmitted from the transmitter 312 is received by the relay node 122. The DL data (MS1) and the DL data (MS2) included in the multiplexed signal output by the transmitter 312 is received by the relay node 121. The DL data (MS3) and the DL data (MS4) included in the multiplexed signal transmitted by the transmitter 312 are received by the relay node 122.

### (Processing related to uplink of base station)

Next, processing at the base station 110 and related to the uplink (UL) that transfers data from the mobile stations to the core network 101 will be described. The signals received by the receiver 302 include the pilot signals transmitted from the relay nodes 121 and 122, and UL data that are from the mobile stations 131-134 and addressed to the core network 101.

The pilot signals include a pilot signal (RN1) transmitted from the relay node 121 and a pilot signal (RN2) transmitted from the relay node 122. The UL data includes UL data (MS1) from the mobile station 131, UL data (MS2) from the mobile station 132, UL data (MS3) from the mobile station 133, and UL data (MS4) from the mobile station 134. The receiver 302 outputs the received pilot signals and UL data to the demultiplexer 303.

The demultiplexer 303 outputs to the SIR measurer 314, the pilot signals output from the receiver 302 and further outputs to the data CH decoder 316, the UL data output from the receiver 302.

The SIR measurer 314, based on the pilot signals output from the demultiplexer 303, measures the signal to interference ratios (SIR) of the first wireless interval 102. For example, the SIR measurer 314 measures the SIR (BS-RN1) between the base station 110 and the relay node 121, based on the pilot signal (RN1). The SIR measurer 314 further measures the SIR (BS-RN2) between the base station 110 and the relay node 122, based on the pilot signal (RN2).

The SIR measurer 314 outputs CQIs indicating the measured SIRs to the UL scheduler 315. The CQIs include a CQI (BS-RN1) indicating the SIR (BS-RN1) between the base station 110 and the relay node 121 and a CQI (BS-RN2) indicating the SIR (BS-RN2) between the base station 110 and the relay node 122.

The control CH decoder 304 outputs decoded representative values to the UL scheduler 315. The representative values output by the control CH decoder 304 include representative values (RN1-MS) of the CQIs indicating the SIRs between the relay node 121 and the mobile stations 131, 132, and representative values (RN2-MS) of the CQIs between the relay node 122 and the mobile stations 133, 134.

The UL scheduler 315 allocates the wireless resources, based on the representative values output from the control CH decoder 304 and the CQIs output from the SIR measurer 314. For example, the UL scheduler 315 allocates wireless resources for 4 types of wireless paths including the path between the base station 110 and the relay node 121, the paths between the relay node 121 and the mobile stations 131, 132, the path between the base station 110 and the relay node 122, and the paths between the relay node 122 and the mobile stations 133, 134.

Besides using the representative values of the CQIs and the CQIs, the UL scheduler 315 may allocate the wireless resources, based on ID information of the relay nodes 121, 122 and the mobile stations 131-134, traffic information and QoS information for the mobile stations 131-134, etc.

The UL scheduler 315 outputs to the control CH generator 306, allocation information indicating the wireless resources allocated for each of the wireless paths. The allocation information output by the UL scheduler 315 includes the allocation information (BS-RN1), the allocation information (RN1-MS), the allocation information (BS-RN2), and the allocation information (RN2-MS).

The control CH generator 306 assigns to control CHs, the allocation information output from the UL scheduler 315 and then outputs the allocation information to the multiplexer 311. The allocation information (BS-RN1) and the allocation information (RN1-MS) output from the control CH generator 306 are transmitted to the relay node 121 by the transmitter 312. The allocation information (BS-RN2) and the allocation information (RN2-MS) output from the control CH generator 306 are transmitted to the relay node 122 by the transmitter 312.

The data CH decoder 316 decodes the UL data output from the demultiplexer 303 and outputs the decoded UL data to the UL buffer 317. The UL buffer 317 stores the UL data output from the data CH decoder 316. The IP transmitter 318 reads out the UL data stored in the UL buffer 317 and transmits the read out UL data to the core network 101.

### (Relay node configuration)

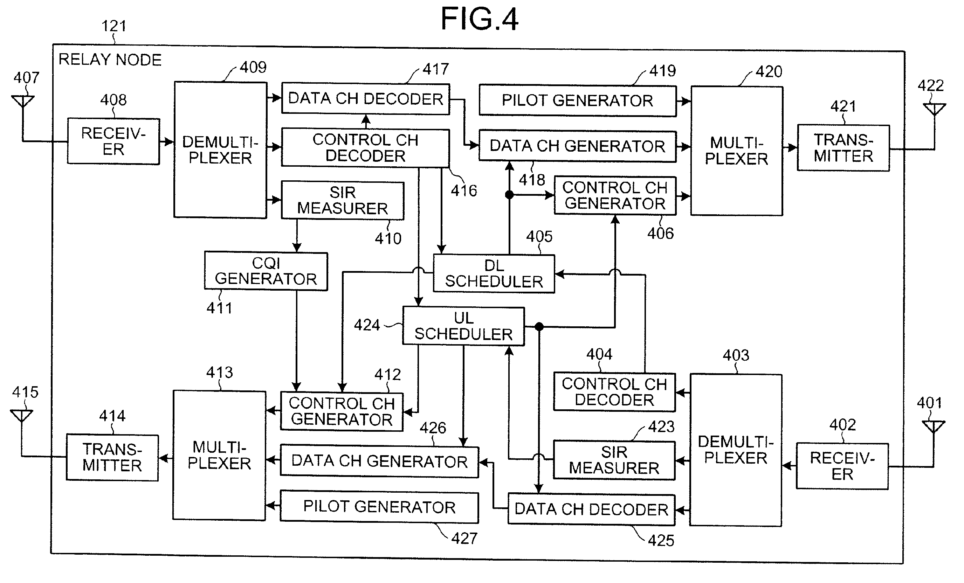

FIG. 4 is a block diagram of the relay node depicted in FIG. 1. As depicted in FIG. 4, the relay node 121 (see FIG. 1) includes a reception antenna 401, a receiver 402, a demultiplexer 403, a control CH decoder 404, a DL scheduler 405, a control CH generator 406, a reception antenna 407, a receiver 408, a demultiplexer 409, an SIR measurer 410, a CQI generator 411, a control CH generator 412, a multiplexer 413, a transmitter 414, a transmission antenna 415, and a control CH decoder 416.

The relay node 121 further includes a data CH decoder 417, a data CH generator 418, a pilot generator 419, a multiplexer 420, a transmitter 421, a transmission antenna 422, an SIR measurer 423, a UL scheduler 424, a data CH decoder 425, a data CH generator 426, and a pilot generator 427. Although herein configuration of the relay node 121 has been described, configuration of the relay node 122 is identical.

The reception antenna 401, the receiver 402, the control CH decoder 404, and the SIR measurer 423 form an acquiring unit that acquires the communication qualities between the relay node 121 and the mobile stations 131, 132. The DL scheduler 405 and the UL scheduler 424 form a calculating unit that calculates a representative value of each of the communication qualities acquired by the acquiring unit. The control CH generator 412, the transmitter 414, and the transmission antenna 415 form a transmitting unit that transmits to the base station 110, the representative values calculated by the calculating unit.

The reception antenna 407, the receiver 408, and the control CH decoder 416 form a receiving unit that receive from the base station 110, the allocation information indicating the wireless resources that have been allocated by the base station 110 based on the representative values transmitted by the transmitting unit. The DL scheduler 405 and the UL scheduler 424 form an allocating unit that allocates to the mobile stations 131, 132, the wireless resources indicated by the allocation information received by the receiving unit.

### (Processing related to downlink of relay node)

First, processing at the relay node 121 and related to the downlink that transfers data the core network 101 to the mobile stations will be described. The receiver 402 receives via the reception antenna 401, signals transmitted from the mobile station 131 and the mobile station 132.

The signals received by the receiver 402 include a CQI (RN1-MS1) between the relay node 121 and the mobile station 131, and a CQI (RN1-MS2) between the relay node 121 and the mobile station 132. The receiver 402 outputs the received CQIs to the demultiplexer 403.

The demultiplexer 403 outputs to the control CH decoder 404, the CQIs output from the receiver 402. The control CH decoder 404 decodes the CQIs output from the demultiplexer 403 and outputs the decoded CQIs to the DL scheduler 405.

The DL scheduler 405 calculates the representative values (RN1-MS) of the CQI (RN1-MS1) and the CQI (RN1-MS2) output from the control CH decoder 404. For example, the DL scheduler 405 calculates as the representative values (RN1-MS), the maximum values or the minimum values between the CQI (RN1-MS1) and the CQI (RN1-MS2) or the averages thereof. The DL scheduler 405 outputs the calculated representative values (RN1-MS) to the control CH generator 412.

Further, the DL scheduler 405 acquires from the control CH decoder 416, the allocation information (RN1-MS) transmitted from the base station 110 consequent to the output of the calculated the representative values (RN1-MS) to the control CH generator 412. The DL scheduler 405 allocates the wireless resources, based on the allocation information (RN1-MS), the CQI (RN1-MS1) and the CQI (RN1-MS2) output from the control CH decoder 404.

For example, the DL scheduler 405 allocates wireless resources to a wireless path between the relay node 121 and the mobile station 131, and between the relay node 121 and the mobile station 132. Besides using the representative values of the CQIs and the CQIs, the DL scheduler 405 may allocate the wireless resources, based on ID information of the mobile stations 131, 132, traffic information and QoS information for the mobile stations 131, 132, etc.

The DL scheduler 405 outputs to the control CH generator 406 and the data CH generator 418, the allocation information (RN1-MS1) and allocation information (RN1-MS2) indicating the wireless resources allocated to the wireless paths. The allocation information (RN1-MS1) is allocation information indicating the wireless resources allocated to the wireless path between the relay node 121 and the mobile station 131. The allocation information (RN1-MS2) is allocation information indicating the wireless resources allocated to the wireless path between the relay node 121 and the mobile station 132.

The control CH generator 406 assigns to control CHs, the allocation information output from the DL scheduler 405 and then outputs the allocation information to the multiplexer 420. The allocation information (RN1-MS1) output from the control CH generator 406 is transmitted by the transmitter 421 to the mobile station 131. The allocation information (RN1-MS2) output from the control CH generator 406 is transmitted by the transmitter 421 to the mobile station 132.

The receiver 408 receives via the reception antenna 407, signals output from the base station 110. The signals received by the receiver 408 include the pilot signal (BS) and the allocation information (RN1-MS) output from the base station 110. The signals received by the receiver 408 further include the DL data (MS1) and the DL data (MS2). The receiver 408 outputs the received pilot signal (BS), allocation information (RN1-MS), and DL data to the demultiplexer 409.

The demultiplexer 409 outputs to the SIR measurer 410, the pilot signal (BS) output from the receiver 408. The demultiplexer 409 further outputs to the control CH decoder 416, the allocation information (RN1-MS) output from the receiver 408. The demultiplexer 409 outputs to the data CH decoder 417, the DL data output from the receiver 408.

The SIR measurer 410, based on the pilot signal (BS) output from the demultiplexer 409, measures the SIR (BS-RN1) between the base station 110 and the relay node 121. The SIR measurer 410 notifies the CQI generator 411 of the measured SIR (BS-RN1).

The CQI generator 411 generates the CQI (BS-RN1) indicated by the SIR (BS-RN1) reported by the SIR measurer 410 and outputs the generated CQI (BS-RN1) to the control CH generator 412.

The control CH generator 412 assigns to control CHs, the representative values (RN1-MS) output from the DL scheduler 405 and the CQI (BS-RN1) output from the CQI generator 411 and then outputs the representative value (RN1-MS) and the CQI (BS-RN1) to the multiplexer 413. The representative values (RN1-MS) and the CQI (BS-RN1) output from the control CH generator 412 are transmitted by the transmitter 41 to the base station 110.

The multiplexer 413 multiplexes the representative values (RN1-MS) and the CQI (BS-RN1) output from the control CH generator 412, the UL data output from the data CH generator 426, and the pilot signal (RN1) output from the pilot generator 427. The multiplexer 413 outputs the multiplexed signal to the transmitter 414. The transmitter 414 transmits to the base station 110 (via the transmission antenna 415), the multiplexed signal output from the multiplexer 413.

The control CH decoder 416 decodes the allocation information (RN1-MS) and the allocation information (BS-RN1) output from the demultiplexer 409. The control CH decoder 416 outputs the decoded allocation information (RN1-MS) to the DL scheduler 405 and outputs allocation the information (BS-RN1) to data CH decoder 417.

Based on the allocation information (BS-RN1) output from the control CH decoder 416, the data CH decoder 417 decodes the DL data output from the demultiplexer 409. In the decoding at the data CH decoder 417, mobile station ID information, which is the transmission destination of the data, and information such as data channel bit counts, etc. may be used. Such information, for example, is reported by the base station 110 through a downlink control CH. The data CH decoder 417 outputs the decoded DL data to the data CH generator 418.

Based on the allocation information output from the DL scheduler 405, the data CH generator 418 assigns to the wireless resources, the DL data output from the data CH decoder 417 and then outputs the DL data to the multiplexer 420.

For example, the data CH generator 418 assigns to the wireless resource indicated by the allocation information (RN1-MS1) output from the DL scheduler 405, the DL data (MS1) output from the data CH decoder 417. Consequently, the DL data (MS1) is transmitted to the mobile station 131 by the wireless resource indicated by the allocation information (RN1-MS1).

The data CH generator 418 assigns to the wireless resource indicated by the allocation information (RN1-MS2) output from the DL scheduler 405, the DL data (MS2) output from the data CH decoder 417. Consequently, the DL data (MS2) is transmitted to the mobile station 132 by the wireless resource indicated by the allocation information (RN1-MS2).

The pilot generator 419 generates the pilot signal (RN1) and outputs the pilot signal (RN1) to the multiplexer 420. The multiplexer 420 multiplexes the allocation information output from the control CH generator 406, the DL data output from the data CH generator 418, and the pilot signal (RN1) output from the pilot generator 419.
The multiplexer 420 outputs the multiplexed signal to the transmitter 421.

The transmitter 421 transmits to the mobile station 131 and the mobile station 132 (via the transmission antenna 422), the multiplexed signal output from the multiplexer 413. The pilot signal (RN1) included in the multiplexed signal transmitted by the transmitter 421 is received by the mobile station 131 and the mobile station 132. The allocation information (RN1-MS1) included in the multiplexed signal transmitted by the transmitter 421 is received by the mobile station 131.

The allocation information (RN1-MS2) included in the multiplexed signal transmitted by transmitter 421 is received by the mobile station 132. The DL data (MS1) included in the multiplexed signal transmitted by the transmitter 421 is received by the mobile station 131. The DL data (MS2) included in the multiplexed signal transmitted by the transmitter 421 is received by the mobile station 132.

### (Processing related to uplink of relay node)

Next, processing at the base station 110 and related to the uplink that transfers data from the mobile stations to the core network 101 will be described. The signals received by the receiver 402 include the pilot signals output from the mobile stations 131 and 132 and UL data that are from the mobile stations and addressed to the core network 101.

The pilot signals include a pilot signal (MS1) transmitted from the mobile station 131 and a pilot signal (MS2) transmitted from the mobile station 132. The UL data includes the UL data (MS1) transmitted from the mobile station 131 and the UL data (MS2) transmitted from the mobile station 132. The receiver 402 outputs the received pilot signals and UL data to the demultiplexer 403.

The demultiplexer 403 outputs to the SIR measurer 423, the pilot signals output from the receiver 402. The demultiplexer 403 outputs to the data CH decoder 425, the UL data output from the receiver 402.

The SIR measurer 423 measures the SIRs of the second wireless interval 103, based on the pilot signals output from the demultiplexer 403. For example, the SIR measurer 423 measures the SIR (RN1-MS1) between the relay node 121 and the mobile station 131, based on the pilot signal (MS1). The SIR measurer 423 further measures the SIR (RN1-MS2) between the relay node 121 and the mobile station 132, based on the pilot signal (MS2).

The SIR measurer 423 outputs CQIs indicating the measured SIRs to the UL scheduler 424. The CQIs include the CQI (RN1-MS1) indicating the SIR between the relay node 121 and the mobile station 131 and the CQI (RN1-MS2) indicating the SIR between the relay node 121 and the mobile station 132. The control CH decoder 416 outputs the decoded allocation information (RN1-MS) to the UL scheduler 424.

The UL scheduler 424 calculates representative values (RN1-MS) of the CQI (RN1-MS1) and the CQI (RN1-MS2) output from the SIR measurer 423. For example, the UL scheduler 424 calculates as the representative values (RN1-MS), the maximum values or the minimum values between the CQI (RN1-MS1) and the CQI (RN1-MS2) or the averages thereof. The UL scheduler 424 outputs the calculated representative values (RN1-MS) to the control CH generator 412.

The UL scheduler 424 acquires from the control CH decoder 416, the allocation information (RN1-MS) transmitted from the base station 110 consequent to the output of the calculated representative values (RN1-MS) to the control CH generator 412. The UL scheduler 424 allocates the wireless resources, based on the acquired allocation information (RN1-MS), the CQI (RN1-MS1) and the CQI (RN1-MS2) output from the SIR measurer 423.

For example, the UL scheduler 424 allocates the wireless resources to a wireless path between the relay node 121 and the mobile station 131 and between the relay node 121 and the mobile station 132. Besides using the representative values of the CQIs and the CQIs, the UL scheduler 424 may allocate the wireless resources, based on ID information of the mobile stations 131, 132, traffic information and QoS information for the mobile stations 131, 132, etc.

The UL scheduler 424 outputs to the control CH generator 406, allocation information indicating the wireless resources allocated to the wireless paths. The allocation information output from the UL scheduler 424 includes the allocation information (RN1-MS1) indicating the wireless resources allocated to the wireless path between the relay node 121 and the mobile station 131, and the allocation information (RN1-MS2) indicating the wireless resources allocated to the wireless path between the relay node 121 and the mobile station 132.

The control CH generator 412 assigns to control CHs, the representative values (RN1-MS) output from the UL scheduler 424 and the CQI (BS-RN1) output from the CQI generator 411; and outputs to the multiplexer 413, allocation information that has been assigned to control CHs. The representative values (RN1-MS) and the CQI (BS-RN1) output from the control CH generator 412 are transmitted by the transmitter 414 and the transmission antenna 415, to the base station 110.

The control CH generator 406 assigns to control CHs, the allocation information output from the UL scheduler 424 and then outputs the allocation information to the multiplexer 420. The allocation information (RN1-MS1) output from the control CH generator 406 is transmitted by the transmitter 421 to the mobile station 131. The allocation information (RN1-MS2) output from the control CH generator 406 is transmitted by the transmitter 421 to the mobile station 132.

Based on the allocation information (RN1-MS1) and the allocation information (RN1-MS2) output from the UL scheduler 424, the data CH decoder 425 decodes the UL data output from the demultiplexer 403 and outputs the decoded UL data to the data CH generator 426.

Based on the allocation information output from the UL scheduler 424, the data CH generator 426 assigns to the wireless resources, the UL data output from the data CH decoder 425. For example, the data CH generator 426 assigns the UL data (MS1) that is output from the data CH decoder 425, to the wireless resources indicated by the allocation information (BS-RN1) that is output from the UL scheduler 424.

Further, the data CH generator 426 assigns the UL data (MS2) that is output from the data CH decoder 425, to the wireless resources indicated by the allocation information (BS-RN1) that is output from the UL scheduler 424. The data CH generator 426 outputs the data-channel-assigned UL data to the multiplexer 413. The UL data output from the data CH generator 426 is transmitted to the base station 110 by the transmitter 414.

### (Mobile station configuration)

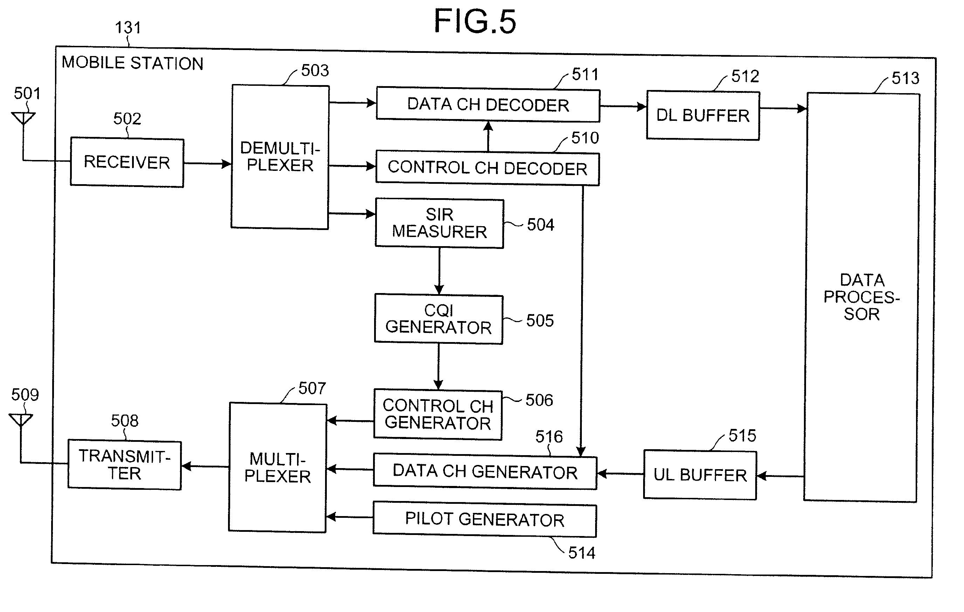

FIG. 5 is a block diagram of the mobile station depicted in FIG. 1. As depicted in FIG. 5, the mobile station 131 (see FIG. 1) includes a reception antenna 501, a receiver 502, a demultiplexer 503, an SIR measurer 504, a CQI generator 505, a control CH generator 506, a multiplexer 507, a transmitter 508, a transmission antenna 509, a control CH decoder 510, a data CH decoder 511, a DL buffer 512, and a data processor 513.

The mobile station 131 further includes a pilot generator 514, a UL buffer 515, and a data CH generator 516. Although configuration of the mobile station 131 has been described, the configuration of the mobile stations 132-134 is identical.

### (Processing related to downlink of mobile station)

First, processing at the mobile station 131 and related to the downlink that receives data from the core network 101 will be described. The receiver 502 receives, via the reception antenna 501, signals transmitted from the relay node 121.

The signals received by the receiver 502 include the pilot signal (RN1) transmitted from the relay node 121 and the allocation information (RN1-MS1). The signals received by the receiver 502 further include the DL data (MS1). The receiver 502 outputs the received the pilot signal (RN1), allocation information (RN1-MS1), and DL data (MS1) to the demultiplexer 503.

The demultiplexer 503 outputs to the SIR measurer 504, the pilot signal (RN1) output from the receiver 502. Further, the demultiplexer 503 outputs to the control CH decoder 510, the allocation information (RN1-MS1) output from the receiver 502. The demultiplexer 503 outputs to the data CH decoder 511, the DL data (MS1) output from the receiver 502.

Based on the pilot signal (RN1) output from the demultiplexer 503, the SIR measurer 504 measures the SIR (RN1-MS1) between the relay node 121 and the mobile station 131, and outputs the measured the SIR (RN1-MS1) to the CQI generator 505. The CQI generator 505 outputs to the control CH generator 506, the CQI (RN1-MS1) indicated by the SIR (RN1-MS1) reported by the SIR measurer 504.

The control CH generator 506 assigns to control CHs, the CQI (RN1-MS1) output from the SIR measurer 504 and then outputs the CQI (RN1-MS1) to the multiplexer 507. The CQI (RN1-MS1) output from the control CH generator 506 is transmitted to the relay node 121 by the transmitter 508.

The multiplexer 507 multiplexes the CQI (RN1-MS1) output from the control CH generator 506, the UL data output from the data CH generator 516, and the pilot signal (MS1) output from the pilot generator 514. The multiplexer 507 outputs the multiplexed signal to the transmitter 508. The transmitter 508 transmits to the relay node 121 (via the transmission antenna 509) the multiplexed signal output from the multiplexer 507.

The control CH decoder 510 decodes the allocation information (RN1-MS1) output from the demultiplexer 503 and outputs the decoded allocation information (RN1-MS1) to the data CH decoder 511. The data CH decoder 511, based on the allocation information (RN1-MS1) output from the control CH decoder 510, decodes the DL data (MS1) output from the demultiplexer 503 and outputs the decoded DL data (MS1) to the DL buffer 512.

The DL buffer 512 stores the DL data (MS1) output from the data CH decoder 511. The data processor 513 reads out the DL data (MS1) in the DL buffer 512 and performs various types of processing on the DL data (MS1).

### (Processing related to uplink of mobile station)

Next, processing at the mobile station 131 and related to the uplink that transmits data to the core network 101 will be described. The pilot generator 514 generates the pilot signal (MS1) and outputs the generated pilot signal (MS1) to the multiplexer 507.

The data processor 513 generates the UL data (MS1) that is addressed to the core network 101 and outputs the generated the UL data (MS1) to the UL buffer 515. The UL buffer 515 stores the UL data (MS1) output from the data processor 513. The control CH decoder 510 outputs the allocation information (RN1-MS1) to the data CH generator 516.

The data CH generator 516 assigns the UL data (MS1) stored in the UL buffer 515, to the wireless resources indicated by the allocation information (RN1-MS1) output from the control CH decoder 510. The data CH generator 516 then outputs the UL data (MS1) to the multiplexer 507. The UL data (MS1) output from the data CH generator 516 is transmitted to the relay node 121 by the transmitter 508.

### (Communications system operation example)

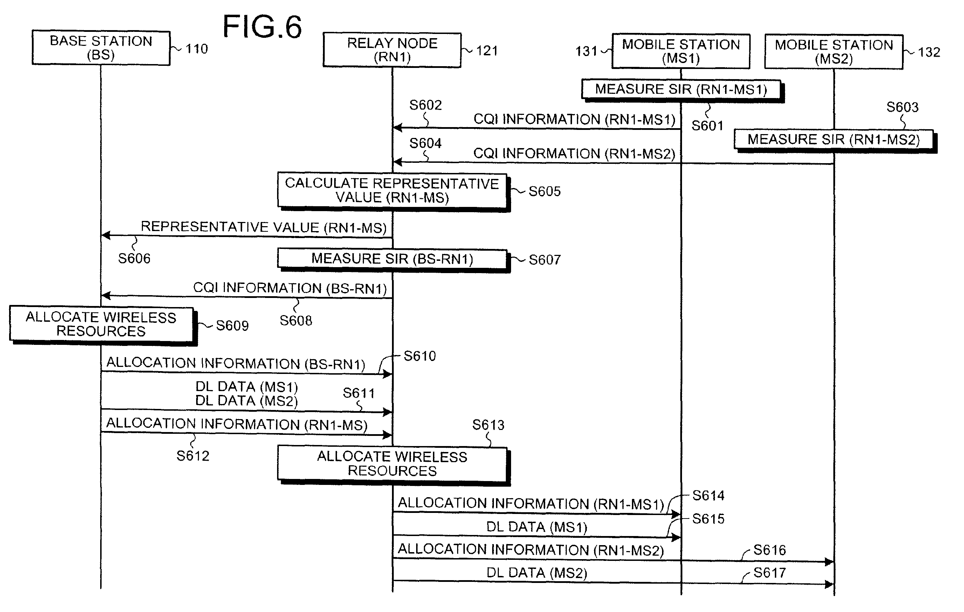

FIG. 6 is a sequence diagram of an example of downlink operations of the communications system. Here, downlink operations by the base station 110, the relay node 121 and the mobile stations 131, 132 in the communications system 100 will be described. The mobile station 131 measures the SIR (RN1-MS1) between the relay node 121 and the mobile station 131 (step S601).

Next, the mobile station 131 transmits to the relay node 121, the CQI (RN1-MS1), which indicates the SIR (RN1-MS1) measured at step S601 (step S602). The mobile station 132 further measures the SIR (RN1-MS2) between the relay node 121 and the mobile station 132 (step S603).

The mobile station 132 transmits to the relay node 121, the CQI (RN1-MS2), which indicates the SIR (RN1-MS2) measured at step S603 (step S604). The relay node 121 calculates the representative values (RN1-MS) of the CQI (RN1-MS1) transmitted at step S602 and of the CQI (RN1-MS2) transmitted at step S604 (step S605).

The relay node 121 transmits the representative values (RN1-MS) calculated at step S604, to the base station 110 (step S606). Next, the relay node 121 measures the SIR (BS-RN1) between the base station 110 and the relay node 121 (step S607), and transmits to the base station 110, the CQI (BS-RN1), which indicates the SIR (BS-RN1) calculated at step S607 (step S608).

The base station 110 allocates wireless resources, based on the representative value (RN1-MS) transmitted at step S606 and the CQI (BS-RN1) transmitted at step S608 (step S609). At step S609, the wireless resources are allocated for 2 types of wireless paths including the wireless path between the base station 110 and the relay node 121, and the wireless paths between the relay node 121 and the mobile stations 131, 132.

Further, although not depicted, the base station 110 further receives the representative values (RN2-MS) and the CQI (BS-RN2) from the relay node 122 (FIG. 1). At step S609, the base station 110 allocates wireless resources to the wireless path between the base station 110 and the relay node 121 and for the wireless paths between the relay node 121 and the mobile stations 131, 132 such that interference does not occur with the wireless resources allocated for the relay node 122 side.

The base station 110 transmits to the relay node 121, the allocation information (BS-RN1), which indicates the wireless resources allocated at step S609 (step S610). Next, the base station 110 transmits the DL data to the relay node 121 (step S611). At step S611, the DL data (MS1) addressed to the mobile station 131 and the DL data (MS2) addressed to the mobile station 132 are transmitted. At step S611, the wireless resources allocated to the wireless path between the base station 110 and the relay node 121 at step S609 are used to transmit the DL data.

The base station 110 transmits the allocation information (RN1-MS) to the relay node 121 (step S612). The allocation information (RN1-MS) transmitted at step S612 is allocation information that indicates the wireless resources allocated for the wireless paths between the relay node 121 and the mobile stations 131, 132 at step S609.

The relay node 121 performs allocation of the wireless resources indicated by the allocation information (RN1-MS) transmitted at step S612 (step S613). At step S613, the wireless resources indicated by the allocation information (RN1-MS) are allocated to the wireless path between the relay node 121 and the mobile station 131 and to the wireless path between the relay node 121 and the mobile station 132.

The relay node 121 transmits to the mobile station 131, the allocation information (RN1-MS1), which indicates the wireless resources allocated at step S613 (step S614). The relay node 121 transmits to the mobile station 131, the DL data (MS1) transmitted at step S611 (step S615). At step S615, the wireless resources allocated to the wireless path between the relay node 121 and the mobile station at step S613 are used to transmit the DL data.

The relay node 121 transmits to the mobile station 132, the allocation information (RN1-MS2), which indicates the wireless resources allocated at step S613 (step S616). The relay node 121 transmits to the mobile station 132, the DL data (MS2) transmitted at step S611 (step S617), ending a series of the operations. At step S617, the wireless resources allocated (at step S613) to the wireless path between the relay node 121 and the mobile station 132 are used to transmit the DL data.

Although downlink operations by the base station 110, the relay node 121 and the mobile stations 131, 132 of the communications system 100 has been described, the downlink operations between the base station 110, the relay node 122 and the mobile stations 133, 134 are identical.

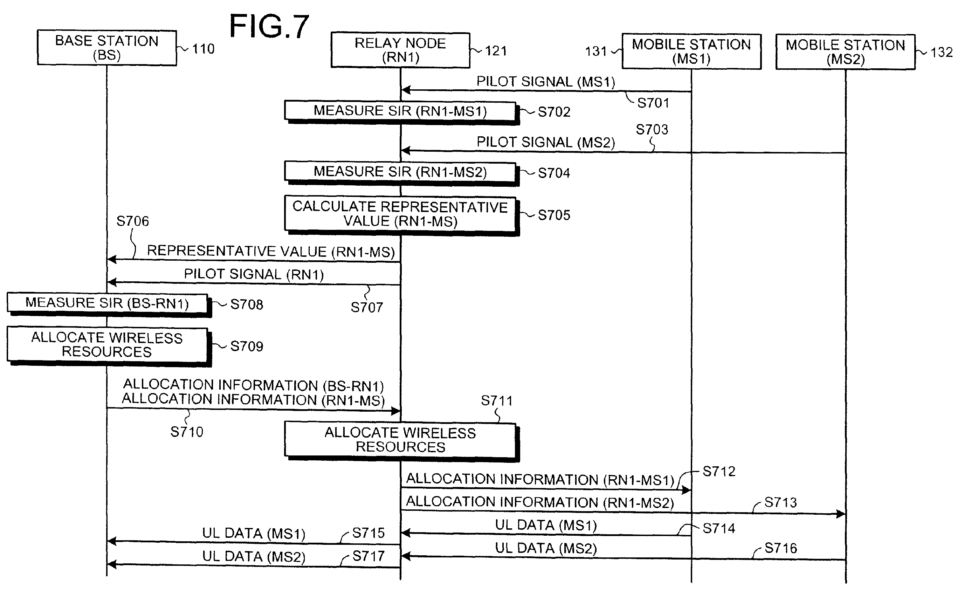

FIG. 7 is a sequence diagram of an example of uplink operations of the communications system. Here, uplink operations by the base station 110, the relay node 121 and the mobile stations 131, 132 of the communications system 100 will be described. The mobile station 131 transmits the pilot signal (MS1) to the relay node 121 (step S701).

The relay node 121 measures the SIR (RN1-MS1) between the relay node 121 and the mobile station 131, based on the pilot signal (MS1) transmitted at step S701 (step S702). The mobile station 132 transmits the pilot signal (MS2) to the relay node 121 (step S703).

The relay node 121 measures the SIR (RN1-MS2) between the relay node 121 and the mobile station 132, based on the pilot signal (MS2) transmitted at step S703 (step S704). The relay node 121 calculates representative values (RN1-MS) of the CQIs that indicate the SIRs calculated at step S702 and step S702 (step S705), and transmits the calculated representative values (RN1-MS) to the base station 110 (step S706).

The relay node 121 transmits the pilot signal (RN1) to the base station 110 (step S707). Based on the pilot signal (RN1) transmitted at step S707, the base station 110 measures the SIR (BS-RN1) between the base station 110 and the relay node 121 (step S708).

The base station 110 allocates wireless resources, based on the representative value (RN1-MS) transmitted at step S706 and the CQI (BS-RN1), which indicates the SIR measured at step S708 (step S709). At step S709, the wireless resources are allocated to the wireless path between the base station 110 and the relay node 121 and for the wireless paths between the relay node 121 and the mobile stations 131, 132.

Although not depicted, the base station 110 further receives the representative values (RN2-MS) and the CQI (BS-RN2) from the relay node 122. At step S709, the base station 110 allocates wireless resources to the wireless path between the base station 110 and the relay node 121 and for the wireless paths between the relay node 121 and the mobile stations 131, 132 such that interference does not occur with the wireless resources allocated for the relay node 122 side.

The base station 110 transmits the allocation information (BS-RN1) and the allocation information (RN1-MS) to the relay node 121 (step S710). The allocation information (BS-RN1) transmitted at step S710 indicates the wireless resources allocated to the wireless path between the base station 110 and the relay node 121 at step S709. The allocation information (RN1-MS) indicates the wireless resources allocated for the wireless paths between the relay node 121 and the mobile stations 131, 132 at step S709.

The relay node 121 allocates the wireless resources indicated by the allocation information (RN1-MS) transmitted at step S710 (step S711). At step S711, the wireless resources indicated by the allocation information (RN1-MS) are allocated to 2 wireless paths including the wireless path between the relay node 121 and the mobile station 131, and the wireless path between the relay node 121 and the mobile station 132.

The relay node 121 transmits to the mobile station 131, the allocation information (RN1-MS1), which indicates the wireless resources allocated at step S711 (step S712). At step S712, allocation information that indicates the wireless resources allocated to the wireless path between the relay node 121 and the mobile station 131 at step S711 is transmitted.

The relay node 121 transmits to the mobile station 132, the allocation information (RN1-MS2), which indicates the wireless resources allocated at step S711 (step S713). At step S713, allocation information that indicates the wireless resources allocated to the wireless path between the relay node 121 and the mobile station 132 at step S711 is transmitted.

The mobile station 131 transmits the UL data (MS1) to the relay node 121 (step S714). At step S714, the UL data (MS1) is transmitted from the mobile station by the wireless resources indicated by the allocation information (RN1-MS1) transmitted to the mobile station 131 at step S712.

The relay node 121 transmits to the base station 110, the UL data (MS1) transmitted from the mobile station 131 at step S714 (step S715). At step S715, the UL data (MS1) is transmitted by the wireless resources indicated by the allocation information (BS-RN1) transmitted from the base station 110 at step S710.

The mobile station 132 transmits the UL data (MS2) to the relay node 121 (step S716). At step S716, the UL data (MS2) is transmitted from the mobile station 132 by the wireless resources indicated by the allocation information (RN1-MS2) transmitted to the mobile station 132 at step S713.

The relay node 121 transmits to the base station 110, the UL data (MS2) transmitted from the mobile station 132 at step S716 (step S717), ending a series of operations. At step S717, the UL data (MS2) is transmitted by the wireless resources indicated by the allocation information (BS-MS2) transmitted at step S710.

Although uplink operations by the base station 110, the relay node 121, and the mobile stations 131, 132 of the communications system 100, uplink operations between the base station 110, the relay node 122, and the mobile stations 133, 134 are identical.

### (Example of communications system operation)

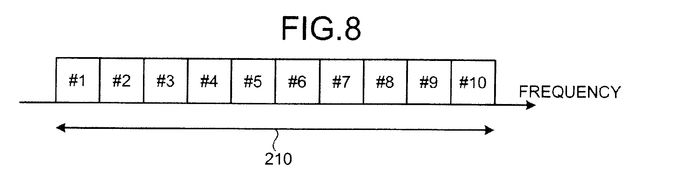

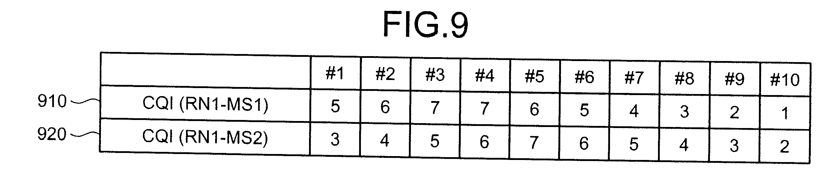

FIG. 8 is a diagram of example of the wireless resource allocation depicted in FIG. 2. In FIG. 8, components identical to those depicted in FIG. 2 are given the same reference numerals used n FIG. 2 and description thereof is omitted. As depicted in FIG. 8, an example will be described where the wireless resource 210 depicted in FIG. 2 is divided into wireless resources #1-#10 (see FIGS. 9 to 16).

FIG. 9 is a diagram of an example the CQIs received by the relay node (RN1). FIG. 9 depicts the CQIs that the relay node 121 receives from the mobile stations. A CQI 910 is the CQI (RN1-MS1) that the relay node 121 received from the mobile station 131. A CQI 920 is the CQI (RN1-MS2) that the relay node 121 received from the mobile station 132.

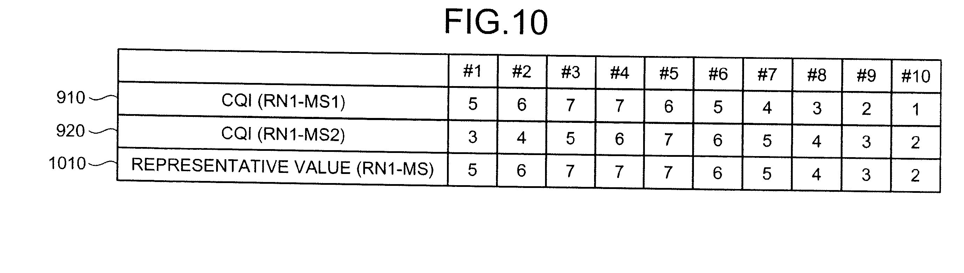

The values in the CQI 910 represent the SIRs in the wireless resources #1-#10, measured by the mobile station 131. The values in the CQI 920 represent the SIRs in the wireless resources #1-#10, measured by the mobile station 132. In this manner, the relay node 121 acquires the SIRs for multiple wireless resources. Here, the SIR values are depicted in a simplified manner and the greater the value, the better the communication quality is (similarly for FIGS. 10 to 13).

FIG. 10 is a diagram of an example of the representative values calculated by the relay node (RN1). In FIG. 10, components identical to those depicted in FIG. 9 are given the same reference numerals used in FIG. 9 and description thereof is omitted. Table values 1010 depicted in FIG. 10 are the representative values (RN1-MS) of the CQI 910 and the CQI 920, calculated by the relay node 121. In this example, the relay node 121 calculates the maximum values between the CQI 910 and the CQI 920 as the representative values (RN1-MS).

For example, for the wireless resource #1, between SIR (5) and SIR (3), the greater value SIR (5) is calculated as the representative value (RN1-MS). Further, for the wireless resource #5, between SIR (6) and SIR (7), the greater value SIR (7) is calculated as the representative value (RN1-MS).

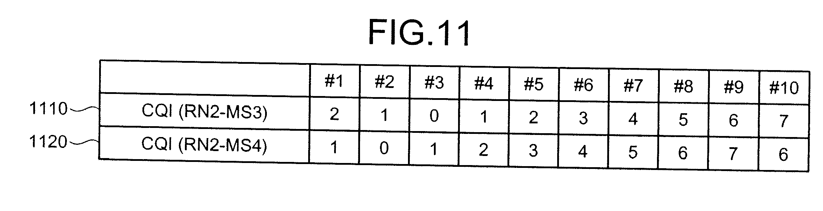

FIG. 11 is a diagram of an example of the CQIs received by relay node (RN2). FIG. 11 depicts an example of the CQIs that the relay node 122 receives from the mobile stations. A CQI 1110 is the CQI (RN2-MS3) that the relay node 122 received from the mobile station 133. A CQI 1120 is the CQI (RN2-MS4) that the relay node 122 received from the mobile station 134.

The values in the CQI 1110 represent the SIRs in the wireless resources #1-#10, measured by the mobile station 133. The values in the CQI 1120 represent the SIRs in the wireless resources #1-410, measured by the mobile station 134. In this manner, the relay node 122 acquires the SIRs for multiple wireless resources.

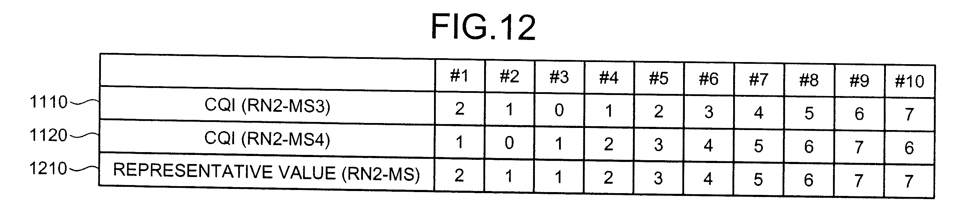

FIG. 12 is a diagram of an example of the representative values calculated by the relay node (RN2). In FIG. 12, components identical to those depicted in FIG. 11 are given the same reference numerals used in FIG. 11 and description thereof is omitted. Table values 1210 depicted in FIG. 12 are the representative values (RN2-MS) of the CQI 1110 and the CQI 1120, calculated by the relay node 122. In this example, the relay node 122 calculates the maximum values between the CQI 1110 and the CQI 1120 as the representative values (RN2-MS).

For example, for the wireless resource #1, between SIR (2) and SIR (1), the greater value SIR (2) is calculated as the representative value (RN2-MS). Further, for the wireless resource #5, between SIR (2) and SIR (3), the greater value SIR (3) is calculated as the representative value (RN2-MS).

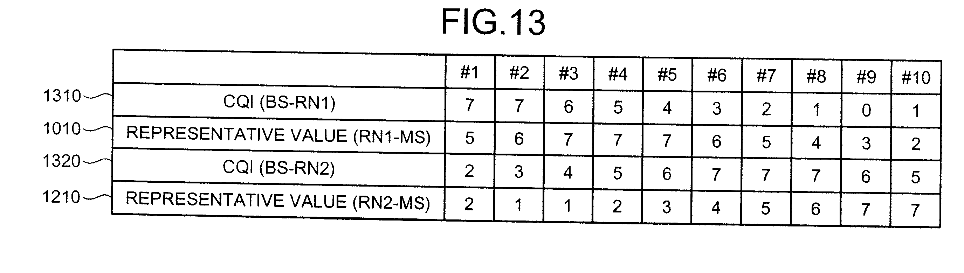

FIG. 13 is a diagram of an example of the representative values and the CQIs received by the base station. In FIG. 13, components identical to those depicted in FIG. 10 or FIG. 12 are given the same reference numerals used in FIGS. 10 and 12, and description thereof is omitted. FIG. 13 depicts an example of the representative values and the CQIs that the base station 110 receives from the relay nodes 121 and 122.

A CQI 1310 is the CQI (BS-RN1) that the base station 110 received from the relay node 121. Table values 1010 (see FIG. 10) are the representative values (RN1-MS) that the base station 110 received from the relay node 121. A CQI 1320 is the CQI (BS-RN2) that the base station 110 received from the relay node 122. Table values 1210 (see FIG. 12) are the representative values (RN2-MS) that the base station 110 received from the relay node 122.

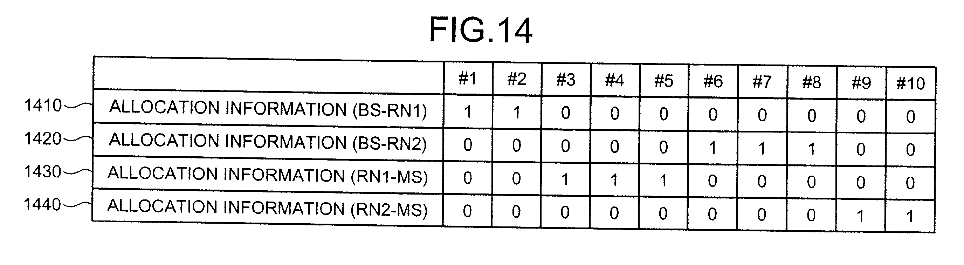

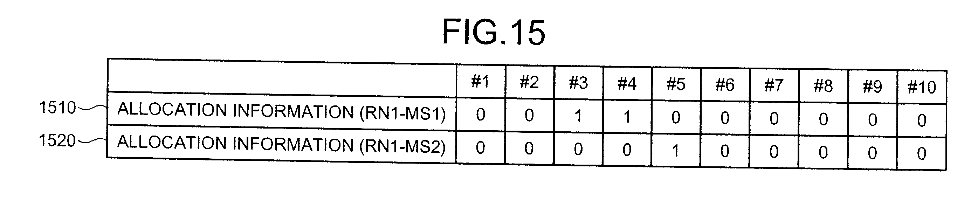

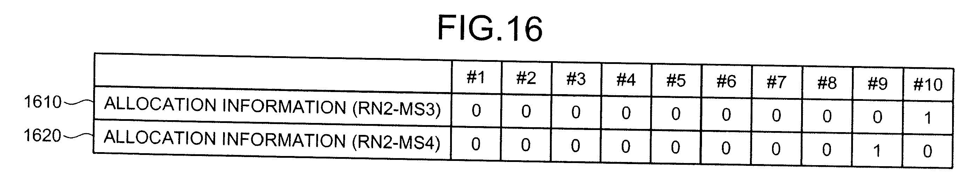

FIG. 14 is a diagram of an example of wireless resource allocation by the base station. FIG. 14 depicts an example of wireless resource allocation by the base station 110. The base station 110 allocates wireless resources, based on the representative values and the CQIs depicted in FIG. 13. Values of "1" and "0" in FIG. 14 indicate whether a wireless resource has been allocated to the wireless interval (similarly for FIGS. 15 and 16).

Allocation information 1410 is the allocation information (BS-RN1) that indicates the wireless resources allocated to the wireless path between the base station 110 and the relay node 121. As indicated by the allocation information 1410, the wireless resources #1, #2 are allocated to the wireless path between the base station 110 and the relay node 121. The allocation information 1410 is transmitted from the base station 110 to the relay node 121.

Allocation information 1420 is the allocation information (BS-RN2) that indicates the wireless resources allocated to the wireless path between the base station 110 and the relay node 122. As indicated by the allocation information 1420, the wireless resources #6-#8 are allocated to the wireless path between the base station 110 and the relay node 122. The allocation information 1420 is transmitted from the base station 110 to the relay node 122.

Allocation information 1430 is the allocation information (RN1-MS) that indicates the wireless resources allocated for the wireless paths between the relay node 121 and the mobile stations 131, 132. As indicated by the allocation information 1430, the wireless resources #3-#5 are allocated for the wireless paths between the relay node 121 and the mobile stations. The allocation information 1430 is transmitted from the base station 110 to the relay node 121.

Allocation information 1440 is the allocation information (RN2-MS) that indicates the wireless resources allocated for the wireless paths between the relay node 122 and the mobile stations 133, 134. As indicated by the allocation information 1440, the wireless resources #9, #10 are allocated for the wireless paths between the relay node 122 and the mobile stations. The allocation information 1440 is transmitted from the base station 110 to the relay node 122.

The base station 110 performs allocation such that in the first wireless interval 102 and the second wireless interval 103, the relay nodes and the mobile stations may use wireless resources that have favorable CQIs. Here, since the volume of data CH information received by the relay nodes 121, 122 and the volume of data CH information received by the relay nodes 121, 122 is thought to be substantially equivalent, the number of allocated wireless resources may be adjusted according to the volume of data CH information to be relayed.

For example, if the CQI of the wireless resources of the first wireless interval 102 allocated to the relay node 121 is high and the CQI of the wireless resources of the second wireless interval 103 is low, adjustment may be performed such that more wireless resources are allocated to the second wireless interval 103.

FIG. 15 is a diagram of wireless resource allocation by the relay node (RN1). FIG. 15 depicts an example of wireless resource allocation by the relay node 121. To the wireless paths between the relay node 121 and the mobile station 131, and between the relay node 121 and the mobile station 132, the relay node 121 allocates the wireless resources #3-#5 indicated in the allocation information 1430 (see FIG. 14) transmitted from the base station 110.

Allocation information 1510 is the allocation information (RN1-MS1) that indicates the wireless resources allocated to the wireless path between the relay node 121 and the mobile station 131. The wireless resources #3, #4 are allocated to the wireless path between the relay node 121 and the mobile station 131. The relay node 121 uses the wireless resources #3, #4 to communicate with the mobile station 131.

Allocation information 1520 is the allocation information (RN1-MS2) that indicates the wireless resources allocated to the wireless path between the relay node 121 and the mobile station 132. The wireless resource #5 is allocated to the wireless path between the relay node 121 and the mobile station 132. The relay node 121 uses the wireless resource #5 to communicate with the mobile station 132.

FIG. 16 is a diagram of an example of wireless resource allocation by the relay node (RN2). FIG. 16 depicts an example of wireless resource allocation by the relay node 122. To the wireless paths between the relay node 122 and the mobile station 133, and between the relay node 122 and the mobile station 134, the relay node 122 allocates the wireless resources #9, #10 indicated by the allocation information 1440 (see FIG. 14) transmitted from the base station 110.

Allocation information 1610 is the allocation information (RN2-MS3) that depicts the wireless resources allocated to the wireless path between the relay node 122 and the mobile station 133. The wireless resource #10 is allocated to the wireless path between the relay node 122 and the mobile station 133. The relay node 122 uses the wireless resource #10 to communicate with the mobile station 133.

Allocation information 1620 is the allocation information (RN2-MS4) that indicates the wireless resources allocated to the wireless path between the relay node 122 and the mobile station 134. The wireless resource #9 is allocated to the wireless path between the relay node 122 and the mobile station 134. The relay node 122 uses the wireless resource #9 to communicate with the mobile station 134.

### (First example of communications system operation)

Configuration may be such that in the communications system 100, the relay nodes transmit representative values of the CQIs for a portion of the wireless resources among the wireless resources #1-#10. For example, in FIG. 10, the relay node 121 calculates representative values of the CQIs for the wireless resources #3-#6, which have relatively high SIR in the CQI, among the wireless resources #1-#10.

For example, the DL scheduler 405 of the relay node 121 calculates representative values "7, 7, 7, 6" of the CQI for the wireless resources #3-#6 and transmits the calculated representative values of CQI, via the transmitter 414, to the base station 110. Consequently, the information volume of the representative values transmitted to the base station 110 may be reduced to 4/10. Further, by preferentially selecting wireless resources having a high SIR among the wireless resources #1-#10, wireless resources having a high SIR may be allocated by the base station 110.

The DL scheduler 405 notifies the base station 110 of the selected wireless resources #3-#6, via the transmitter 414. The DL scheduler 305 of the base station 110 allocates for the wireless paths between the relay node 121 and the mobile stations, wireless resources that are within the range of the wireless resources (for example, wireless resources #3-#6) notified by the relay node 121.

Although description for the DL scheduler 405 of the relay node 121 and the DL scheduler 305 of the base station 110 has been given, operation for the UL scheduler 424 of the relay node 121 and the UL scheduler 315 of the base station 110 is identical. Furthermore, the same operations may be performed between the base station 110 and the relay node 122.

### (Second example of communications system operation)

Configuration may be such that in the communications system 100, the relay node 121 and the relay node 122 calculate representative values of the CQIs for the wireless resources #1-#10 and further calculate representative values of the calculated representative values. For example, in FIG. 10, the DL scheduler 405 of the relay node 121 calculates representative values "5, 6, 7, 7, 7, 6, 5, 4, 3, 2" of the CQIs for the wireless resources #1-#10.

Subsequently, the DL scheduler 405 calculates the average "5.2" of the calculated representative values and transmits the calculated average, via the transmitter 414, to the base station 110. Consequently, the information volume of the representative values transmitted to the base station 110 may be reduced to 1/10.

Although description for the DL scheduler 405 of the relay node 121 and the DL scheduler 305 of the base station 110 has been given, operation for the UL scheduler 424 of the relay node 121 and the UL scheduler 315 of the base station 110 is identical. Furthermore, the same operation may be performed between the base station 110 and the relay node 122.

### (Effect of reduction of volume of CQI information)

An effect of the reduction of the volume of the CQI information by the communications system 100 will be described. First, a communications system different from the communications system 100 is considered. In Patent Document 1, a specific procedure for performing scheduling for the interval between the base station and the relay nodes and the interval between the relay nodes and the mobile stations is not sufficiently disclosed.

Therefore, herein, based on Patent Document 1, easily derivable scheduling is considered. Further, concerning the basic configuration of the communications system, a configuration identical to the communications system 100 depicted in FIG. 1 is assumed. The interval between the base station and the relay nodes is regarded as the first wireless interval and the interval between the relay nodes and the mobile stations is regarded as the second wireless interval.

The mobile stations acquire the CQI of the second wireless interval and output the CQI to the relay node. After receiving the CQI of the second wireless interval of the mobile stations, the relay node uses the first wireless interval to transfer the CQI to the base station. The relay node further acquires the CQI of the first wireless interval and transmits the CQI to the base station. The base station receives the CQI of the second wireless interval of the mobile stations and the CQI of the first wireless interval of the relay nodes, and based on all of the CQIs, performs scheduling for both the first wireless interval and the second wireless interval.

The entire system band is divided into N sub-bands (wireless resources) and to transmit the CQI of 1 sub-band, 5 bits are required, where the base station performs scheduling for K mobile stations and M relay nodes. In this case, the CQI bit count transmitted to the base station via the first wireless interval is 5×N×M [bits] concerning the first wireless interval and 5×N×K [bits] concerning second wireless interval.

In particular, since the number of mobile stations K is assumed to be a large value as the maximum capacity of the system, the CQI bit count of the second wireless interval is extremely large. In this manner, in the scheduling procedure, a high volume of CQI is transmitted to the base station. Consequently, in a cellular base station having a large number of mobile stations, increases in the volume of CQI information is particularly a problem.

Next, consideration is given to an example of the volume of CQI information in the communications system 100. In the communications system 100, the relay nodes 121, 122 (hereinafter, "the relay nodes") calculate a representative CQI of the second wireless interval, based on the CQIs from the connected mobile stations 131-134 (hereinafter, "the mobile stations") and transmit the calculated representative CQI to the base station 110.

A representative CQI, for example, is the highest CQI among the CQIs, the average of the CQIs, the lowest CQI among the CQIs, etc. The base station 110 receives from the connected relay node, the representative CQI of the second wireless interval 103 and the CQI of the first wireless interval 102. Subsequently, the base station 110 allocates wireless resources (performs scheduling) such that interference does not occur between the wireless resources used in the respective wireless intervals.

The relay nodes use the wireless resources of the first wireless interval 102 allocated thereto by the base station 110, to receive signals from the base station 110. The relay nodes use the wireless resources of the second wireless interval 103 allocated thereto, to transmit signals from the base station 110 to the mobile stations. Since the CQIs of the mobile stations for the second wireless interval 103 is only notified to the relay nodes, how the wireless resources of the second wireless interval 103 are allocated to the mobile stations is determined by the schedulers of the relay nodes.

In this case, for example, the CQI bit count related to the second wireless interval 103 and transmitted to the base station 110 via the first wireless interval 102 is 5×N×M [bits]. Therefore, the CQI bit count related to the second wireless interval 103 and transmitted via the first wireless interval 102 to the base station 110 may be reduced from the bit count 5×N×K [bits] for the other scheduling procedure above, to 5×N×M [bits].

Since the number of relay nodes M is substantially lower than the number of mobile stations K, the CQI bit count related to the second wireless interval 103 and transmitted via the first wireless interval 102 to the base station 110 may be substantially reduced. In this manner, by a configuration where the relay node calculates a representative CQI of the second wireless interval 103 and transmits the calculated representative CQI to the base station 110, the volume of CQI information received by the base station 110 may be substantially reduced.

Further, configuration may be such that in the communications system 100, the relay nodes acquire the CQIs for multiple wireless resources (see FIGS. 9 to 12) and transmit the representative values of the CQIs for a portion of the wireless resources, enabling the volume of CQI information transmitted from the relay nodes to the base station 110 to be reduced.

In this manner, the wireless resources required in the second wireless interval 103 are narrowed down at each of the relay nodes and the representative values of the CQIs of the wireless resource are transmitted to the base station 110. For example, if the relay node narrows down the wireless resources required in the second wireless interval 103 to half, the CQI bit count related to the second wireless interval 103 and transmitted to the base station 110 becomes 5×N/2×M [bits]. In this case, even if N bits are used to notify the base station 110 of the information concerning the wireless resources narrowed down by the relay node, the additional volume of feedback information remains in the N×M [bits].

Therefore, the CQI bit count related to the second wireless interval 103 and transmitted via the first wireless interval 102 to the base station 110 may be reduced from 5×N×K [bits] for the conventional procedure to 5×N/2×M+N×M [bits]. As described, since the number of relay nodes M is substantially lower than the number of mobile stations K, the CQI bit count related to the second wireless interval 103 and transmitted via the first wireless interval 102 to the base station 110 may be substantially reduced.

Further, configuration may be such that the relay nodes acquire the CQIs for multiple wireless resources (see FIGS. 9 to 12), calculate representative values of the CQIs for the wireless resources, and further calculate a representative value of the calculated representative values. Consequently, the volume of communication quality information transmitted from the relay nodes to the base station 110 may be further reduced.

In this manner, the CQIs related to the second wireless interval 103 and transmitted by relay nodes to the base station 110 are not the CQIs for each wireless resource, but rather a representative value for all the wireless resources (for example, the average). Since the base station 110 does not obtain a CQI for each wireless resource, the base station allocates wireless resources for the second wireless interval 103, based on the representative value for all the wireless resources.

On the other hand, since the relay nodes have a CQI for each of the wireless resources of the mobile stations of the second wireless interval 103, the wireless resources of the second wireless interval and allocated by the base station 110 may each be allocated to an optimal mobile station. Consequently, the CQI bit count related to the second wireless interval 103 and transmitted through the first wireless interval 102 to the base station 110 may be reduced from 5×N×K [bits] for the conventional scheduling procedure above to 5xM [bits].

As described, according to the disclosed relay node, relay method, base station, communication method, and communications system, in the first wireless interval and the second wireless interval, the allocation of wireless resources that are used by the relay nodes is performed by the base station, whereby the wireless resources may be efficiently allocated so that interference between the wireless resources of the relay nodes does not occur.

Concerning the communication qualities between the relay nodes and the mobile stations, the relay nodes send representative values to the base station and allocate to the mobile stations, the wireless resources allocated by the base station, whereby the volume of information related to communication quality from the relay node to the base station may be reduced. Further, since the allocation of the wireless resources to wireless paths between the relay node and the mobile station is performed by the relay node, the processing load for scheduling at the base station may be reduced.

When downlink communication from the base station to the mobile station is performed, communication qualities transmitted from the mobile station are received by the relay node, whereby the communication qualities between the relay node and the mobile stations may be acquired at the relay node. Further, when uplink communication from the mobile station to the base station is performed, the pilot signals transmitted from the mobile stations are received by the relay node and based on the received pilot signals, the communication qualities are measured, whereby the communication qualities between the relay node and the mobile stations may be acquired at the relay node.

Further, configuration may be such that the relay node acquires the communication qualities for multiple wireless resources (see FIGS. 9 to 12) and transmits representative values of the communication qualities for a portion of the wireless resources, whereby the volume of information related to communication quality from the relay node to the base station may be further reduced.

Additionally, configuration may be such that the relay node acquires the communication qualities for multiple wireless resources (see, FIGS. 9 to 12), calculates representative values of the communication qualities concerning the wireless resources, and further calculates a representative value of the calculated representative values, whereby the volume of information related to the communication quality from the relay node to the base station may be further reduced.

In the embodiments, although SIR is measured as the wireless interval communication quality and a CQI is used as the quality indicative information indicating the measured SIR, the form of the communication quality and of the quality indicative information is not limited to the SIR and the CQI.

## Claims

1. A relay node that relays wireless communication between a base station and mobile stations, the relay node comprising:
an acquiring unit that acquires communication qualities between the relay node and the mobile stations;
a calculating unit that calculates a representative value for each of the acquired communication qualities;
a transmitting unit that transmits the calculated representative values to the base station;
a receiving unit that receives from the base station, allocation information indicating wireless resources that have been allocated by the base station based on the representative values transmitted by the transmitting unit; and
an allocation unit that allocates to the mobile stations, the wireless resources indicated by the received allocation information.

2. The relay node according to claim 1, wherein the acquiring unit acquires the communication qualities transmitted from the mobile stations, when downlink communication from the base station to the mobile stations is performed.

3. The relay node according to claim 1, wherein the acquiring unit acquires pilot signals transmitted from the mobile stations when uplink communication from the mobile stations to the base station is performed, and based on the pilot signals, measures the communication qualities.

4. The relay node according to claim 1, wherein
the acquiring unit acquires the communication qualities of the wireless resources, and
the transmitting unit transmits the representative values calculated by the calculating unit for a portion of the wireless resources.

5. The relay node according to claim 1, wherein
the acquiring unit acquires the communication qualities for the wireless resources,
the calculating unit calculates the representative value for each of the wireless resources and calculates a representative value of the calculated representative values, and
the transmitting unit transmits the representative value of the calculated representative values.

6. A relay method of a relay node that relays wireless communication between a base station and mobile stations, the relay method comprising:
acquiring communication qualities between the relay node and the mobile stations;
calculating a representative value for each of the acquired communication qualities;
transmitting the calculated representative values to the base station;
receiving from the base station, allocation information indicating wireless resources that have been allocated by the base station based on the representative values; and
allocating to the mobile stations, the wireless resources indicated by the received allocation information.

7. A base station that performs wireless communication between a relay node and mobile stations, the base station comprising:
a receiving unit that receives from the relay node, representative values of communication qualities between the relay node and the mobile stations;
an allocating unit that based on the received representative values, allocates wireless resources for wireless paths between the relay node and the mobile stations; and
a transmitting unit that transmits to the relay node, allocation information that indicates the wireless resources allocated by the allocating unit.

8. A communication method of a base station that performs wireless communication with mobile stations via relay of a relay node, the communication method comprising:
receiving from the relay node, representative values of communication qualities between the relay node and the mobile stations
allocating, based on the received representative values, wireless resources for wireless paths between the relay node and the mobile stations; and
transmitting to the relay node, allocation information that indicates the wireless resources allocated at the allocating.

9. A communications system that performs wireless communication between a base station and mobile stations, via relay of a relay node, the communications system comprising:
the base station that receives from the relay node, representative values of communication qualities between the relay node and the mobile stations and that based on
the received representative values, allocates wireless resources for wireless paths between the relay node and the mobile stations;
the relay node that allocates to the mobile stations, the wireless resources allocated by the base station; and
the mobile stations that perform wireless communication with the relay node using the wireless resources allocated by the relay node.

10. A communication method of performing wireless communication between a base station and mobile stations, via relay of a relay node, the communication method comprising:
acquiring, by the relay node, representative values of communication qualities between the relay node and the mobile stations;
transmitting the acquired representative values to the base station, by the relay node;
allocating, by the base station, wireless resources for wireless paths between the relay node and the mobile stations, based on the representative values transmitted by the relay node;
transmitting, by the base station and to the relay node, allocation information that indicates the wireless resources allocated by the base station; and
allocating, by the relay node and to the mobile stations, the wireless resources indicated by the allocation information transmitted by the base station.
